# EUROPEAN PATENT APPLICATION

(11) **EP 4 411 185 A1**
(43) Date of publication of application: **07.08.2024**
(21) Application number: 24150514.8
(22) Date of filing: 05.01.2024
(51) Int. Cl.: F16K 11/087, F16K 5/06

(54) **MULTI-WAY VALVE WITH SEAL INSERTS**

(30) Priority: 02.02.2023 US 202363443022 P
(71) Applicant: Stant USA Corp., Connersville, IN 47331 (US)
(72) Inventor: BROCK, Michael S., Connersville, Indiana, 47731 (US)
(74) Representative: Gille Hrabal Partnerschaftsgesellschaft mbB Patentanwälte

(57) **Abstract**

A multi-way valve (10) with seal inserts adapted to control a flow of fluid includes a valve housing (12), a ball valve (14), a monolithic elastic seal (16), and a rigid seal shape retainer (18). With the multi-way valve of the present disclosure, a multi-way valve with improved sealing is provided.

## Description

### TECHNICAL FIELD

The present disclosure relates to multi-way valves, and particularly to multi-way valves with seals.

### BACKGROUND

Multi-way valves with seals are used for controlling the flow of fluid to various thermal fluid circuits in a vehicle. However, there is a need for multi-way valves with improved sealing that do not require powerful actuators to overcome high seal friction.

### SUMMARY

To this end, the present disclosure provides a multi-way valve with seal inserts that control the flow of fluid in a vehicle with improved sealing and managed friction. The multi-way valve may include a valve housing, a ball valve, and a monolithic elastic seal to block movement of fluid from the ball valve to an internal cavity of the valve housing.

According to an aspect of the present application, the valve housing may include a valve housing body, an inlet port extending around an inlet axis, and an outlet port extending around an outlet axis. The valve housing body may be shaped to define the internal cavity.

According to an aspect of the present application, the ball valve may be formed to include a passage for selectively carrying fluid from the inlet port to the outlet port. The ball valve may be mounted for rotation about a valve axis in the internal cavity of the valve housing body.

According to an aspect of the present application, the monolithic elastic seal may include an internal sleeve portion and an external ring portion. The monolithic elastic seal may extend around the outlet axis.

According to an aspect of the present application, the internal sleeve portion may include an inner contact member that engages the ball valve to block movement of fluid from the passage in the ball valve to the internal cavity of the valve housing body exterior to the ball valve when the ball valve is carrying fluid from the inlet port to the outlet port. The external ring portion may engage a line cap for carrying fluid discharged from the outlet port away from the valve housing.

According to an aspect of the present application, the external ring portion may be positioned between and contacting an external facing surface of the valve housing body facing away from the ball valve and an internal facing surface of the line cap facing toward the ball valve. The external ring portion may be positioned at a location axially spaced apart from the inner contact member of the internal sleeve portion relative to the outlet axis so that compressive forces applied to the external ring portion by the external facing surface of the valve housing body and the internal facing surface of the line cap are not transferred to the inner contact member of the internal sleeve portion in order to avoid inducing excess friction on the ball valve that would resist rotation of the ball valve.

According to an aspect of the present application, the multi-way valve may further include a rigid seal shape retainer. The rigid seal-shape retainer may engage an interior face of the internal sleeve portion inside the outlet port of the valve housing body to retain a round shape of the internal sleeve portion around the outlet axis. The elastic seal may be overmolded onto the rigid seal shape retainer.

According to an aspect of the present application, the seal shape retainer may include a tube that engages the interior face of the internal sleeve portion and a flange arranged to extend from the tube perpendicularly away from the outlet axis. The flange may be located between the external facing surface of the valve housing body and the internal facing surface of the line cap.

According to an aspect of the present application, the external ring portion of the seal may extend along an inner axial face of the flange, an outer axial face of the flange, and a radially outer edge of the flange relative to the outlet axis. The external ring portion may include a first leg, a second leg spaced apart axially from the first leg relative to the outlet axis, and a terminal end. The terminal end may connect the first and second legs. The terminal end of the external ring portion may be located radially between the flange of the seal shape retainer and the valve housing body relative to the outlet axis.

According to another aspect of the present application, the rigid seal shape retainer may be provided by a cylindrical insert extending from the line cap into the outlet port. The line cap may include a base and an outer shell extending from a rim of the base toward the outlet port in the same direction as the cylindrical insert. The cylindrical insert may be located radially inward of the outer shell relative to the outlet axis. The outer shell, the base, and the cylindrical insert may cooperate to form a receiver space for receiving the external ring portion of the elastic seal to locate the external ring portion radially between the outer shell and the cylindrical insert relative to the outlet axis.

According to another aspect of the present application, the receiver space formed by the outer shell, the base, and the cylindrical insert may receive a shoulder of the valve housing body formed around the outlet port to locate the shoulder radially between the outer shell of the line cap and the external ring portion of the seal insert relative to the outlet axis. The cylindrical insert of the line cap may extend a first distance into the outlet port radially inward of the valve housing body relative to the outlet axis. The outer shell of the line cap may extend a second distance toward the outlet port radially outward of the valve housing body relative to the outlet axis. The first distance may be greater than the second distance.

With the multi-way valve with seal inserts of the present disclosure, a multi-way valve with improved sealing is provided. The external ring portion may be positioned between and contacting the external facing surface of the valve housing body facing away from the ball valve and the internal facing surface of the line cap facing toward the ball valve. The positioning of the external ring portion allows compressive forces to be applied to the external ring portion, while ensuring that the compressive forces are not transferred to the inner contact member of the internal sleeve portion. The sealing at the external ring portion is independent of the sealing at the internal sleeve portion such that excess friction is not induced on the ball valve from the inner contact member of the internal sleeve portion that would resist rotation of the ball valve.

### BRIEF DESCRIPTIONS OF THE DRAWINGS

The detailed description particularly refers to the accompanying figures in which:
Fig. 1 is a perspective diagrammatic view of a multi-way valve with seal inserts with a portion broken away to expose a seal insert;
Fig. 2 is a cross-sectional view showing the encircled portion of the multiway valve of Fig. 1;
Fig. 3 is a detail view of Fig. 2;
Fig. 4 is a cross-sectional view of another multi-way valve with seal inserts; and
Fig. 5 is a detail view of Fig. 4.

### DETAILED DESCRIPTION

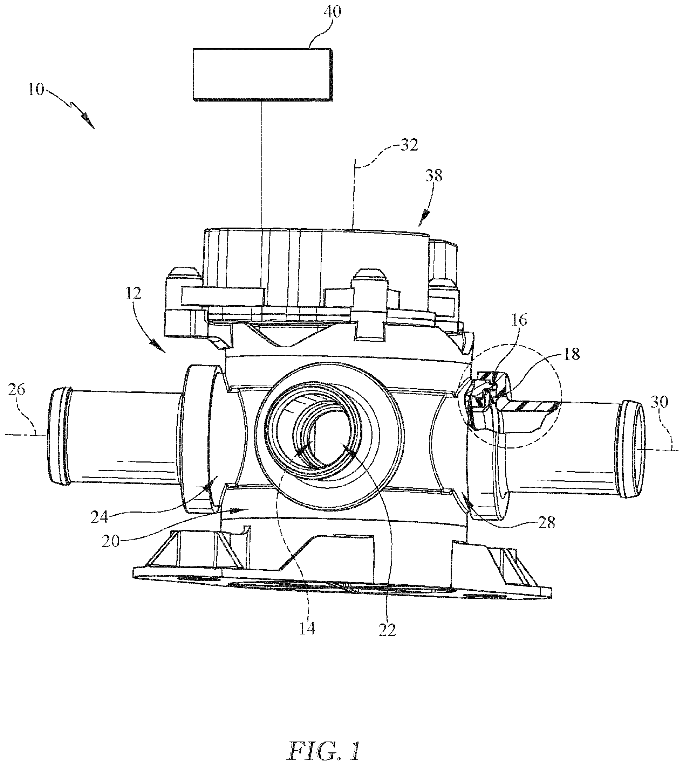

An illustrative multi-way valve 10 configured to control a flow of fluid in a vehicle is shown in Fig. 1. The multi-way valve 10 includes a valve housing 12, a ball valve 14, a monolithic elastic seal 16, and a rigid seal shape retainer 18 as shown in Figs. 1-3. The valve housing 12 includes a valve housing body 20 shaped to define an internal cavity 22, an inlet port 24 extending around an inlet axis 26, and an outlet port 28 extending around an outlet axis 30. The ball valve 14 is arranged in the internal cavity 22 to control the flow of fluid through the valve housing body 20. The monolithic elastic seal 16 is configured to seal between the ball valve 14 and the internal cavity 22 of the valve housing body 20 such that fluid does not flow into the internal cavity 22 around the ball valve 14. The rigid seal shape retainer 18 is configured to retain a round shape of the monolithic elastic seal 16.

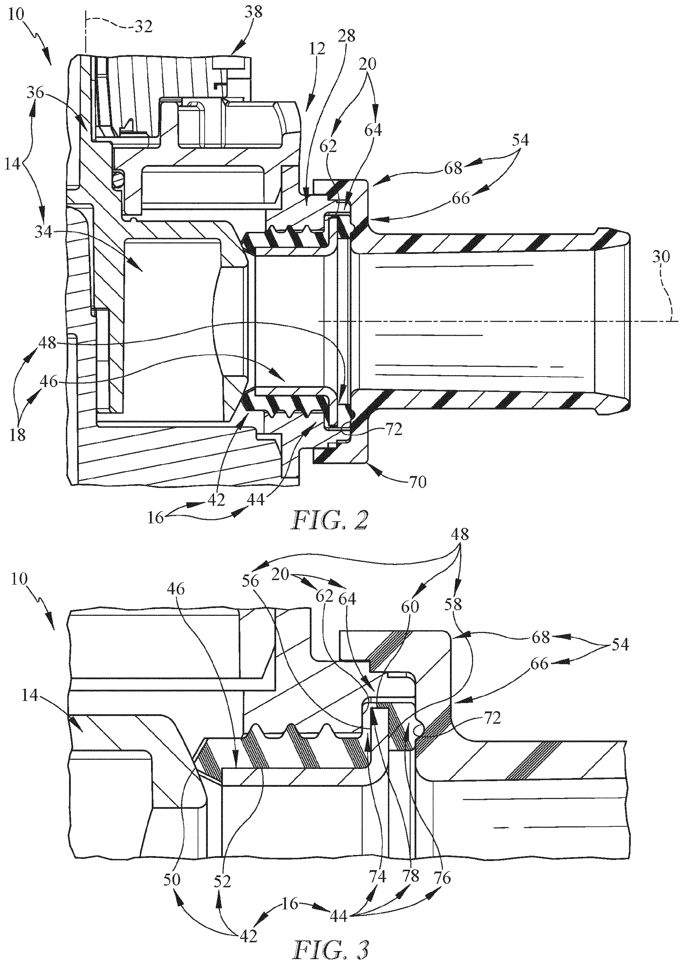

The ball valve 14 is formed to include a passage 34 for selectively carrying fluid from the inlet port 24 to the outlet port 28 and a stem 36 extending upwardly away from the passage 34 as shown in Fig. 2. The ball valve 14 is mounted for rotation about a valve axis 32 in the internal cavity 22 of the valve housing body 20. The stem 36 of the ball valve 14 is coupled to an actuator 38 to drive rotation of the ball valve 14 about the valve axis 32. The actuator 38 is coupled to a motor 40 to drive the actuator 38.

The monolithic elastic seal 16 includes an internal sleeve portion 42 and an external ring portion 44 as shown in Figs. 2 and 3. The seal 16 extends around the outlet axis 30 of the outlet port 28. The internal sleeve portion 42 of the seal 16 blocks the flow of fluid from the passage 34 in the ball valve 14 into the internal cavity 22 of the valve housing body 20 exterior to the ball valve 14 when the ball valve 14 is carrying fluid from the inlet port 24 to the outlet port 28. The external ring portion 44 of the seal 16 is axially spaced apart from the internal sleeve portion 42 relative to the outlet axis 30. The external ring portion 44 of the seal 16 is positioned between and contacting the valve housing body 20 and a line cap 54 configured to carry fluid discharged from the outlet port 28 away from the valve housing 12.

The rigid seal shape retainer 18 includes a tube 46 and a flange 48 arranged to extend from the tube 46 perpendicularly away from the outlet axis 30 as shown in Figs. 2 and 3. The tube 46 of the retainer 18 engages the internal sleeve portion 42 of the seal 16 inside the outlet port 28 to retain the round shape of the internal sleeve portion 42 relative to the outlet axis 30.

By axially compressing the external ring portion 44 of the seal 16 between the valve housing body 20 and the line cap 54, the compressive forces applied to the external ring portion 44 by the valve housing body 20 and the line cap 54 are not transferred to the internal sleeve portion 42 of the seal 16. In this way, the sealing of the internal sleeve portion 42 is independent of, or de-coupled from, the sealing of the external ring portion 44. Minimizing the compressive forces on the internal sleeve portion 42 of the seal 16 ensures that excess friction is not applied to the ball valve 14 by the internal sleeve portion 42 such that the ball valve 14 resists rotation about the valve axis 32. The reduction of friction applied to the ball valve 14 by the internal sleeve portion 42 of the seal 16 allows for better performance of the actuator 38. Additionally, the reduction of friction ensures that a larger actuator is not required.

Other multi-way valves incorporate seals that may require the actuator to have an increased torque capability to overcome the friction of the seals between different components. Requiring an actuator with an increased torque capability may increase the cost and the size of the actuator.

The multi-way valve 10 of the present disclosure includes the external ring portion 44 of the seal 16 being compressed between the valve housing body 20 and the line cap 54 such that these compressive forces are not transferred to the internal sleeve portion 42 of the seal 16. Thus, the sealing at the external ring portion 44 and the sealing at the internal sleeve portion 42 are de-coupled and independent so that excess friction is not induced on the ball valve 14.

Turning again to the valve housing body 20, the valve housing body 20 is formed to include an outer wall 62 and a shoulder 64 extending axially away from the outer wall 62 relative to the outlet axis 30 as shown in Figs. 2 and 3. The outer wall 62 and the shoulder 64 extend circumferentially around the outlet axis 30. The outer wall 62 is located radially and axially inward of the shoulder 64 relative to the outlet axis 30. The outer wall 62 faces away from the ball valve 14 and toward the line cap 54.

As the ball valve 14 is rotated about the valve axis 32, various fluid flow paths may be formed to control the flow of fluid through the passage 34 of the ball valve 14 and the valve housing 12. The ball valve 14 rotates about the valve axis 32 relative to the valve housing 12.

In the illustrative embodiment, the seal 16 is monolithically formed out of an elastic material and the seal 16 is overmolded onto the rigid seal shape retainer 18 as suggested in Figs. 2 and 3. The seal 16 includes the internal sleeve portion 42 and the external ring portion 44.

The internal sleeve portion 42 of the seal 16 includes an inner contact member 50 and an interior face 52 as shown in Fig. 3. The inner contact member 50 engages the ball valve 14 to block the flow of fluid from the passage 34 in the ball valve 14 into the internal cavity 22 of the valve housing 12. The interior face 52 of the internal sleeve portion 42 is formed on a radially interior surface of the internal sleeve portion 42. The retainer 18 engages the interior face 52 of the internal sleeve portion 42.

The external ring portion 44 of the seal 16 includes a first leg 74, a second leg 76, and a terminal end 78 as shown in Fig. 3. The first leg 74 of the external ring portion 44 is located axially inward of the second leg 76 relative to the outlet axis 30. The terminal end 78 interconnects the first leg 74 and the second leg 76. The terminal end 78 is radially outward of the first leg 74 and the second leg 76 relative to the outlet axis 30.

In the illustrative embodiment, the rigid seal shape retainer 18 is made of metallic materials. The retainer 18 includes the tube 46 and the flange 48 as shown in Figs. 2 and 3.

The tube 46 of the retainer 18 engages the interior face 52 of the internal sleeve portion 42 of the seal 16 as shown in Fig. 3. The tube 46 extends into the outlet port 28 of the valve housing 12.

The flange 48 is arranged to extend from the tube 46 perpendicularly away from the outlet axis 30 as shown in Figs. 2 and 3. The flange 48 of the retainer 18 includes an inner axial face 56, an outer axial face 58, and a radially outer edge 60. The inner axial face 56 of the flange 48 is located axially inward of the outer axial face 58 relative to the outlet axis 30. The inner axial face 56 faces toward the ball valve 14 and the valve housing body 20. The outer axial face 58 faces toward the line cap 54. The radially outer edge 60 of the flange 48 is a radially outward facing surface that faces away from the outlet axis 30.

The external ring portion 44 of the seal 16 extends along the inner axial face 56 of the flange 48, the outer axial face 58 of the flange 48, and the radially outer edge 60 of the flange 48 relative to the outlet axis 30 as shown in Fig. 3. The first leg 74 of the external ring portion 44 engages the inner axial face 56 of the flange 48. The second leg 76 of the external ring portion 44 engages the outer axial face 58 of the flange 48. The terminal end 78 of the external ring portion 44 engages the radially outer edge 60 of the flange 48.

The multi-way valve 10 further includes the line cap 54 as shown in Figs. 2 and 3. The line cap 54 includes a base 66 and an outer shell 68 extending from a rim 70 of the base 66. The base 66 is formed to include an internal facing surface 72 facing toward the ball valve 14. The outer shell 68 extends from the rim 70 toward the ball valve 14.

The external ring portion 44 of the seal 16 is located axially between and contacting the outer wall 62 of the valve housing body 20 and the internal facing surface 72 of the base 66 of the line cap 54 relative to the outlet axis 30 as shown in Figs. 2 and 3. In the illustrative embodiment, the external ring portion 44 is compressed between the outer wall 62 of the valve housing body 20 and the internal facing surface 72 of the base 66 of the line cap 54 relative to the outlet axis 30.

The first leg 74 of the external ring portion 44 engages the outer wall 62 of the valve housing body 20 as shown in Figs. 2 and 3. The second leg 76 of the external ring portion 44 engages the internal facing surface 72 of the base 66 of the line cap 54. The flange 48 of the retainer 18 is located axially between the first leg 74 and the second leg 76 of the external ring portion 44 relative to the outlet axis 30. Thus, the flange 48 is axially located between the outer wall 62 of the valve housing body 20 and the internal facing surface 72 of the base 66 of the line cap 54 relative to the outlet axis 30.

The external ring portion 44 is located radially inward of the shoulder 64 of the valve housing body 20 relative to the outlet axis 30 as shown in Figs. 2 and 3. The shoulder 64 of the valve housing body 20 is located radially between the outer shell 68 of the line cap 54 and the terminal end 78 of the external ring portion 44 relative to the outlet axis 30.

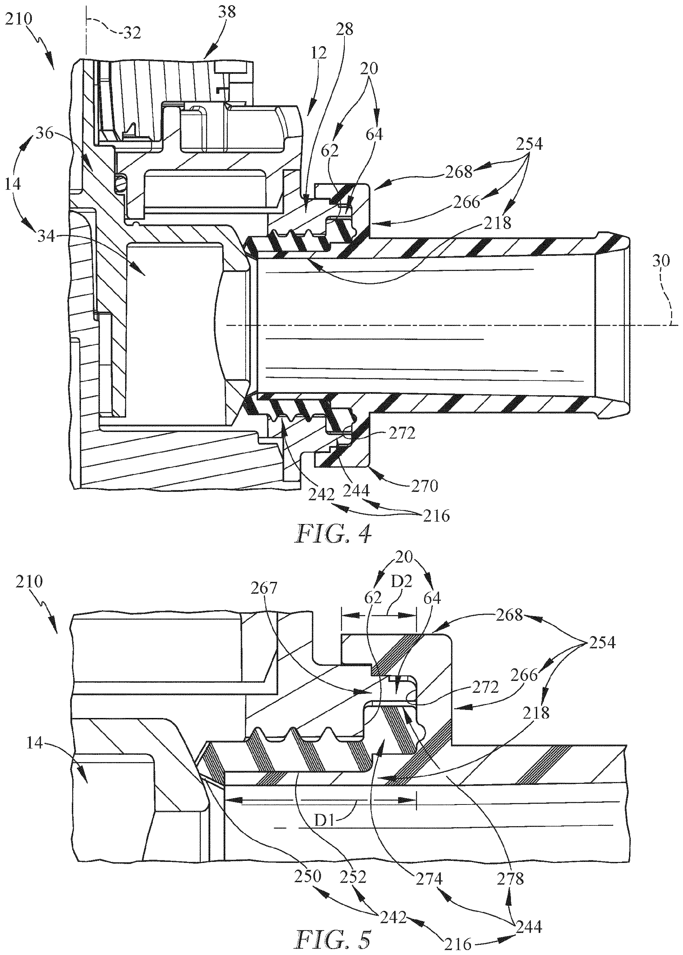

Another embodiment of a multi-way valve 210 in accordance with the present disclosure is shown in Figs. 4 and 5. The multi-way valve 210 is substantially similar to the multi-way valve 10 shown in Figs. 2 and 3. The description of the multiway valve 10 is incorporated by reference to apply to the multi-way valve 210, except in instances when it conflicts with the specific description and the drawings of the multiway valve 210.

The multi-way valve 210 includes the valve housing 12, the ball valve 14, a monolithic elastic seal 216, and a rigid seal shape retainer 218 as shown in Fig. 4. The valve housing 12 and the ball valve 14 of the multi-way valve 210 are identical to those of the multi-way valve 10. The monolithic elastic seal 216 extends around the outlet axis 30 of the outlet port 28. The rigid seal shape retainer 218 is provided by a line cap 254.

The monolithic elastic seal 216 includes an internal sleeve portion 242 and an external ring portion 244 as shown in Figs. 4 and 5. The internal sleeve portion 242 of the seal 216 blocks the flow of fluid from the passage 34 in the ball valve 14 into the internal cavity 22 of the valve housing 12 exterior to the ball valve 14 when the ball valve 14 is carrying fluid from the inlet port 24 to the outlet port 28. The external ring portion 244 of the seal 216 is axially spaced apart from the internal sleeve portion 242 relative to the outlet axis 30. The external ring portion 244 of the seal 216 is positioned between and contacting the valve housing body 20 and the line cap 254. The line cap 254 is configured to carry fluid discharged from the outlet port 28 away from the valve housing 12.

The internal sleeve portion 242 of the seal 216 includes an inner contact member 250 and an interior face 252 as shown in Fig. 5. The inner contact member 250 engages the ball valve 14 to block the flow of fluid from the passage 34 in the ball valve 14 into the internal cavity 22 of the valve housing 12. The interior face 252 of the internal sleeve portion 242 is formed on a radially interior surface of the internal sleeve portion 242. The retainer 218 engages the interior face 252 of the internal sleeve portion 242.

The external ring portion 244 of the seal 216 includes a first leg 274 and a terminal end 278 as shown in Fig. 5. The terminal end 278 is radially outward of the first leg 274 relative to the outlet axis 30.

The multi-way valve 210 further includes the line cap 254 as shown in Figs. 4 and 5. The line cap 254 of the multi-way valve 210 includes the retainer 218, a base 266, and an outer shell 268. In the illustrative embodiment, the line cap 254 is monolithically formed out of a plastic material. The retainer 218, also known as a cylindrical insert 218, extends from the base 266 toward and into the outlet port 28. The base 266 is formed to include an internal facing surface 272 facing toward the ball valve 14. The outer shell 268 extends from a rim 270 of the base 266 toward the outlet port 28. The outer shell 268 is located radially outward of the cylindrical insert 218 relative to the outlet axis 30.

The cylindrical insert 218 engages the interior face 252 of the internal sleeve portion 242 of the seal 216 inside the outlet port 28 of the valve housing 12 to retain the round shape of the internal sleeve portion 242 relative to the outlet axis 30 as shown in Figs. 4 and 5. The internal sleeve portion 242 of the seal 216 is located radially between the valve housing body 20 and the cylindrical insert 218 relative to the outlet axis 30.

The external ring portion 244 of the seal 216 is located axially between and contacting the outer wall 62 of the valve housing body 20 and the internal facing surface 272 of the base 266 of the line cap 254 relative to the outlet axis 30 as shown in Figs. 4 and 5. The external ring portion 244 of the seal 216 is located radially between the shoulder 64 of the valve housing body 20 and the cylindrical insert 218 of the line cap 254 relative to the outlet axis 30.

The base 266, the outer shell 268, and the cylindrical insert 218 of the line cap 254 cooperate to form a receiver space 267 for receiving the external ring portion 244 of the seal 216 and the shoulder 64 of the valve housing body 20 as shown in Figs. 4 and 5. The shoulder 64 of the valve housing body 20 is located radially between the outer shell 268 of the line cap 254 and the terminal end 278 of the external ring portion 244 relative to the outlet axis 30.

The cylindrical insert 218 extends a first distance D1 from the base 266 of the line cap 254 toward the valve housing body 20 as shown in Figs. 4 and 5. The cylindrical insert 218 is radially inward of the outlet port 28 and the valve housing body 20 relative to the outlet axis 30. The outer shell 268 extends a second distance D2 from the base 266 of the line cap 254 toward the valve housing body 20. The outer shell 268 is radially outward of the valve housing body 20 relative to the outlet axis 30. The first distance D1 is greater than the second distance D2.

## Claims

1. A multi-way valve with seal inserts **characterized in that** the multi-way valve comprises:
a valve housing including a valve housing body shaped to define an internal cavity, an inlet port extending around an inlet axis, and an outlet port extending around an outlet axis,
a ball valve mounted for rotation about a valve axis in the internal cavity of the valve housing body, the ball valve formed to include a passage for selectively carrying fluid from the inlet port to the outlet port, and
a monolithic elastic seal that extends around the outlet axis, the seal shaped to include:
an internal sleeve portion including an inner contact member that engages the ball valve to block movement of fluid from the passage in the ball valve to the internal cavity of the valve housing body exterior to the ball valve when the ball valve is carrying fluid from the inlet port to the outlet port, and
an external ring portion that engages a line cap for carrying fluid discharged from the outlet port away from the valve housing,
wherein the external ring portion is positioned between and contacting an external facing surface of the valve housing body facing away from the ball valve and an internal facing surface of the line cap facing toward the ball valve at a location axially spaced apart from the inner contact member of the internal sleeve portion relative to the outlet axis so that compressive forces applied to the external ring portion by the external facing surface of the valve housing body and the internal facing surface of the line cap are not transferred to the inner contact member of the internal sleeve portion in order to avoid inducing excess friction on the ball valve that would resist rotation of the ball valve.

2. The multi-way valve with seal inserts of claim 1, **characterized in that** the multi-way valve further comprises a rigid seal shape retainer that engages an interior face of the internal sleeve portion inside the outlet port of the valve housing to retain a round shape of the internal sleeve portion around the outlet axis.

3. The multi-way valve with seal inserts of claim 2, **characterized in that** the elastic seal is overmolded onto the rigid seal shape retainer.

4. The multi-way valve with seal inserts of claim 3, **characterized in that** the seal shape retainer includes a tube that engages the interior face of the internal sleeve portion and a flange arranged to extend from the tube perpendicularly away from the outlet axis, and wherein the flange is located axially between the external facing surface of the valve housing body and the internal facing surface of the line cap relative to the outlet axis.

5. The multi-way valve with seal inserts of claim 4, **characterized in that** the external ring portion of the seal extends along an inner axial face of the flange, an outer axial face of the flange, and a radially outer edge of the flange relative to the outlet axis.

6. The multi-way valve with seal inserts of claim 5, **characterized in that** the external ring portion includes a first leg, a second leg spaced apart axially from the first leg relative to the outlet axis, and a terminal end connecting the first and second legs, and wherein the terminal end of the external ring portion is located radially between the flange of the seal shape retainer and the valve housing body relative to the outlet axis.

7. The multi-way valve with seal inserts of claim 2, **characterized in that** the rigid seal shape retainer is provided by a cylindrical insert extending from the line cap into the outlet port.

8. The multi-way valve with seal inserts of claim 7, **characterized in that** the line cap includes a base and an outer shell extending from a rim of the base toward the outlet port in the same direction as the cylindrical insert, wherein the cylindrical insert is located radially inward of the outer shell relative to the outlet axis, and the outer shell, the base, and the cylindrical insert cooperate to form a receiver space for receiving the external ring portion of the elastic seal to locate the external ring portion radially between the outer shell and the cylindrical insert relative to the outlet axis.

9. The multi-way valve with seal inserts of claim 8, **characterized in that** the receiver space formed by the outer shell, the base, and the cylindrical insert receives a shoulder of the valve housing body formed around the outlet port to locate the shoulder radially between the outer shell of the line cap and the external ring portion of the seal insert relative to the outlet axis.

10. The multi-way valve with seal inserts of claim 9, **characterized in that** the cylindrical insert of the line cap extends a first distance into the outlet port radially inward of the valve housing body relative to the outlet axis and the outer shell of the line cap extends a second distance toward the outlet port radially outward of the valve housing body relative to the outlet axis, and wherein the first distance is greater than the second distance.
